# EUROPÄISCHE PATENTSCHRIFT

(11) **EP 3 683 551 B1**
(45) Veröffentlichungstag und Bekanntmachung des Hinweises auf die Patenterteilung: **10.03.2021**
(21) Anmeldenummer: 19152247.3
(22) Anmeldetag: 17.01.2019
(51) Int. Cl.: G01D 5/244, G01D 5/20, G01D 5/245, G01D 11/30, G01D 11/24

(54) **ABTASTEINHEIT FÜR EINE WINKELMESSEINRICHTUNG**
SAMPLING UNIT FOR AN ANGLE MEASURING DEVICE
UNITÉ DE BALAYAGE POUR UN DISPOSITIF DE MESURE D'ANGLE

(43) Veröffentlichungstag der Anmeldung: 22.07.2020
(73) Patentinhaber: Dr. Johannes Heidenhain GmbH, 83301 Traunreut (DE)
(72) Erfinder: ROSENEGGER, Gregor, 83236 Übersee (DE); MITTERER, Andreas, 83527 Haag (DE); FUNK, Christian, 83026 Rosenheim (DE); STRASSER, Erich, 83308 Trostberg (DE)

(56) Entgegenhaltungen:
- EP-A2- 2 472 235
- DE-C1- 19 546 865
- US-A1- 2006 244 439
- US-A1- 2008 289 838
- US-A1- 2018 023 469

## Beschreibung

### GEBIET DER TECHNIK

Winkelmesseinrichtungen werden beispielsweise in Drehgebern zur Bestimmung der Winkelstellung zweier relativ zueinander drehbarer Maschinenteile verwendet.

Bei Abtasteinheiten von induktiven Winkelmesseinrichtungen werden häufig Erregerspulen und Empfängerspulen in Form von Leiterbahnen auf einer gemeinsamen Leiterplatte aufgebracht, die beispielsweise mit einem Stator eines Drehgebers fest verbunden ist. Dieser Leiterplatte gegenüber liegend befindet sich ein weiteres Bauelement, auf der als Winkelskala in periodischen Abständen elektrisch leitende Flächen als Teilungsstruktur aufgebracht sind und welche mit dem Rotor des Drehgebers drehfest verbunden ist. Wenn an den Erregerspulen ein elektrisches Erregerfeld angelegt wird, werden in den Empfängerspulen während der Relativdrehung zwischen Rotor und Stator von der Winkelstellung abhängige Ausgangssignale erzeugt. Diese Ausgangssignale werden dann in einer Auswerteelektronik weiterverarbeitet.

Prinzipiell wird zwischen Winkelmesseinrichtungen mit Eigenlagerung und Winkelmesseinrichtungen ohne Eigenlagerung, im Folgenden als lagerlose Winkelmesseinrichtungen bezeichnet, unterschieden. Winkelmesseinrichtungen mit Eigenlagerung weisen üblicherweise vergleichsweise kleine Wälzlager auf, so dass die relativ zueinander drehbaren Bauteilgruppen innerhalb der betreffenden Winkelmesseinrichtung in definierter axialer und radialer Position relativ zueinander angeordnet sind. Dagegen muss bei den lagerlosen Winkelmesseinrichtungen bei der Montage an einer Maschine darauf geachtet werden, dass die zueinander drehbaren Bauteilgruppen in der richtigen Position insbesondere im korrekten axialen Abstand zueinander festgelegt werden.

### STAND DER TECHNIK

In der DE 10 2008 046 741 A1 der Anmelderin ist eine Winkelmesseinrichtung beschrieben, welche eine Abtasteinheit mit einem Steckverbinder aufweist. Weiterhin ist in der EP 0 845 659 A2 eine Abtasteinheit gezeigt, die an einem Antrieb montiert ist.

Durch die Offenlegungsschrift EP 2 472 235 A2 ist ein Näherungssensor bekannt, in dessen Gehäuse eine beidseitig bestückte Leiterplatte angeordnet ist, welche mit einem elektrischen Kabel kontaktiert ist.

In der Druckschrift US 2008/0289838 A1 wird ein Winkeldetektionsanordnung beschrieben, die ein Gehäuse und einen elektrischen Steckverbinder aufweist. In dem Gehäuse befindet sich eine Leiterplatte mit einem Sensor, wobei die Leiterplatte spielfrei gegen einen Bund innerhalb des Gehäuses gedrückt wird.

### ZUSAMMENFASSUNG DER ERFINDUNG

Der Erfindung liegt die Aufgabe zugrunde eine Abtasteinheit für eine insbesondere lagerlose induktive Winkelmesseinrichtung zu schaffen, die mit vergleichsweise wenig Aufwand präzise herstellbar ist.

Diese Aufgabe wird erfindungsgemäß durch die Merkmale des Anspruches 1 gelöst.

Die Erfindung umfasst demnach eine Abtasteinheit zur Bestimmung einer relativen Winkelstellung einer um eine Achse bezüglich der Abtasteinheit drehbaren Winkelskala. Die Abtasteinheit umfasst eine Leiterplatte, die eine erste Oberfläche und eine zweite Oberfläche aufweist. Weiterhin umfasst die Abtasteinheit zumindest eine Detektoranordnung, die so angeordnet ist, dass die der ersten Oberfläche der Leiterplatte axial gegenüber liegende Winkelskala abtastbar ist. Die Abtasteinheit umfasst auch eine Auswerteelektronik, die üblicherweise aus mehreren elektronischen Bauelementen besteht und häufig eine integrierte Schaltung (ASIC-Baustein) aufweist. Zudem weist die Abtasteinheit einen Kontaktträger auf, welcher elektrische Kontakte zur Herstellung einer Steckverbindung umschließt und auf der zweiten Oberfläche der Leiterplatte montiert ist, so dass die Kontakte in einer Richtung verlaufen, die eine axiale Komponente aufweist. Der Kontaktträger weist eine insbesondere zylindrische Außenwand auf, deren Symmetrieachse die Achse ist um die die Winkelskala drehbar ist. Schließlich umfasst die Abtasteinheit einen Gehäusekörper mit einer Öffnung, welche eine Innenwand aufweist. Der Kontaktträger ragt in die Öffnung, wobei zwischen der Innenwand der Öffnung und der Außenwand des Kontaktträgers ein erstes elastisches Element mit radialer Vorspannung angeordnet ist, so dass der Kontaktträger bezüglich der Innenwand der Öffnung zentriert angeordnet ist. Die Leiterplatte ist mit einem ersten Spalt zum Gehäusekörper radial beabstandet zum Gehäusekörper drehsteif mit dem Gehäusekörper verbunden.

Die Detektoranordnung kann beispielsweise auf der ersten Oberfläche der Leiterplatte montiert sein. Sofern die Detektoranordnung als eine oder mehrere Empfängerwindungen oder als magnetoresistive Leiterbahnen ausgestaltet ist, kann über der Detektoranordnung auch eine dünne Schicht angeordnet sein, die insbesondere isolierende Eigenschaften aufweist und einen mechanischen Schutz darstellt. Von der Detektoranordnung sind winkelabhängige Ausgangssignale erzeugbar, welche in der Auswerteelektronik weiterverarbeitbar sind. Winkelabhängige Ausgangssignale sind insbesondere Signale, welche eine Information über die relative Winkelstellung zwischen der Winkelskala und der Abtasteinheit beinhalten.

In weiterer Ausgestaltung der Erfindung ist der erste Spalt mit einem Klebstoff ausgefüllt.

Mit Vorteil ist das erste elastische Element als ein O-Ring ausgestaltet, welcher bezüglich der Achse zentrisch angeordnet ist und insbesondere in Folge der radialen Vorspannung verformt ist.

Vorteilhafterweise ist die Leiterplatte mit einem zweiten Spalt zum Gehäusekörper axial beabstandet zum Gehäusekörper drehsteif mit dem Gehäusekörper verbunden, wobei der zweite Spalt ebenfalls mit einem Klebstoff ausgefüllt sein kann.

In weiterer Ausgestaltung der Erfindung ist die Außenwand des Kontaktträgers geometrisch gemäß einer Mantelseite eines Zylinders ausgebildet.

Weiterhin kann die Öffnung eine rotationssymmetrische Innenfläche aufweisen, wobei die oben genannte Achse die Symmetrieachse der Innenfläche darstellt. Beispielsweise kann die Innenfläche die Innenkontur eines Hohlzylinders sein.

Mit Vorteil weist der Gehäusekörper einen Boden auf. Zudem ist die Leiterplatte derart am Gehäusekörper angeordnet, dass die Auswerteelektronik beziehungsweise elektronische Bauelemente der Auswerteelektronik zwischen dem Boden und der Leiterplatte angeordnet ist beziehungsweise sind. In diesem Fall kann der Boden eine Bohrung aufweisen, in der zur Aufnahme des Kontaktträgers eine Hülse befestigt ist. Eine besonders wirtschaftliche Bauweise kann erreicht werden, wenn als Hülse eine standardisierte Gehäuseverschraubung verwendet wird. Alternativ ist auch eine Bauweise möglich, in der kein weiteres Bauteil verwendet wird, so dass der Kontaktträger unmittelbar in eine (Gewinde-) Bohrung des Bodens ragt.

Mit Vorteil ist zwischen der Hülse und der Bohrung ein zweites elastisches Element vorgesehen, das insbesondere als ein O-Ring ausgestaltet sein kann.

Vorteilhafterweise weist der Gehäusekörper sich in Umfangsrichtung um die Achse erstreckende Ausnehmungen und sich in Umfangsrichtung zwischen zwei Ausnehmungen in axialer Richtung erstreckende Stege auf. Insbesondere sind die Ausnehmungen und die Stege derart ausgestaltet, dass der Gehäusekörper axial biegeweich aber torsionssteif und radialsteif ist. Zudem ist der Boden axial zwischen den Ausnehmungen und der Leiterplatte angeordnet, so dass insbesondere die Auswerteelektronik geschützt zwischen den Ausnehmungen und der Leiterplatte untergebracht ist.

Im Folgenenden sind unter dem Begriff Stege diejenigen steg- oder streifenförmigen Bereiche des Gehäusekörpers gemeint, die mit axialer Richtungskomponente verlaufen beziehungsweise die sich mit axialer Richtungskomponente erstrecken. Jeder Steg befindet sich zwischen zwei Ausnehmungen, so dass insbesondere in Umfangsrichtung beidseitig eines Steges jeweils eine Ausnehmung angeordnet ist.

Der Gehäusekörper ist torsionssteif ausgestaltet, das heißt, dass sich dieser bei eingeleiteten tangential gerichteten Kräften nicht oder extrem geringfügig verformt. Zudem kann der Gehäusekörper bezüglich einer radialen Richtung steif ausgestaltet sein.

Mit Vorteil weist die Abtasteinheit Stege auf, zwischen welchen axial eine Ausnehmung angeordnet ist, so dass diese Stege axial versetzt angeordnet sind. Insbesondere können die betreffenden Stege fluchtend angeordnet sein, das heißt, dass diese in Umfangsrichtung ohne Versatz zueinander angeordnet sind.

In weiterer Ausgestaltung der Erfindung weist die Abtasteinheit ein erstes Paar von Stegen auf, wobei die Stege dieses ersten Paares in Umfangsrichtung versetzt angeordnet sind. Die Stege können beispielsweise um 180° in Umfangsrichtung versetzt angeordnet sein oder mit 120°. Im Hinblick auf die Festlegung des Versatzwinkels, der insbesondere ein Zentriwinkel um die Achse A ist, kann als Bezugslinie jeweils die Mitte eines Steges (bezogen auf die Umfangsrichtung) gesehen werden.

Vorteilhafterweise weist die Abtasteinheit ein erstes Paar von Stegen auf, wobei diese Stege in einer geometrischen Ebene angeordnet sind, deren Normalenvektor parallel zur Achse orientiert ist.

Zudem kann die Abtasteinheit ein zweites Paar von Stegen aufweisen, wobei dann die Stege des ersten Paares bezüglich der Stege des zweiten Paares axial versetzt angeordnet sein können. Darüber hinaus können die Stege des ersten Paares bezüglich der Stege des zweiten Paares in Umfangsrichtung versetzt angeordnet sein. Mit Vorteil sind die Stege des ersten Paares bezüglich der Stege des zweiten Paares in Umfangsrichtung jeweils in einem gleichen Winkel versetzt angeordnet. Insbesondere können die betreffenden Stege um 60° oder um 72° oder um 90° oder um 120° versetzt angeordnet sein.

In weiterer Ausgestaltung der Erfindung weist die Abtasteinheit ein erstes Paar von Ausnehmungen auf. Vorteilhafterweise weist dann die Abtasteinheit ein zweites Paar von Ausnehmungen auf, wobei die Ausnehmungen des ersten Paares bezüglich der Ausnehmungen des zweiten Paares axial versetzt angeordnet sind. Insbesondere kann dann die Ausnehmungen des ersten Paares bezüglich der Ausnehmungen des zweiten Paares in Umfangsrichtung versetzt angeordnet sein.

Mit Vorteil erstreckt sich zumindest eine der Ausnehmungen über einen Umfangswinkel von mindestens 70°, insbesondere über einen Umfangswinkel von mindestens 100° oder mindestens 140°. Weiterhin ist es vorteilhaft, wenn sich alle Ausnehmungen über einen gleich großen Umfangswinkel erstrecken oder sich zumindest die Ausnehmungen eines Paares über einen gleich großen Umfangswinkel erstrecken.

Der Begriff Paar bedeutet eine Gruppe von zwei Elementen, hier also zwei Ausnehmungen oder zwei Stege. Diese Formulierung schließt nicht aus, dass die entsprechenden Bereiche des Gehäusekörpers zusätzlich zu den zwei Elementen auch ein weiteres oder mehrere weitere derartige Elemente (Ausnehmung, Steg) aufweisen können.

Mit Vorteil ist der Gehäusekörper in Richtung der Achse über einen Hub von mindestens 0,5 mm, insbesondere von mindestens 1,0 mm, bevorzugt mindestens 1,5 mm elastisch verformbar ausgestaltet.

Vorteilhafterweise weist der Gehäusekörper eine Anschlagfläche auf, die eine Normale aufweist, welche eine Richtungskomponente parallel zur Achse aufweist. Insbesondere soll dadurch ermöglicht werden, dass sich der Gehäusekörper an den Anschlagflächen axial abstützen kann.

Mit Vorteil ist der Gehäusekörper so ausgestaltet, dass der Boden und die Stege monolithisch aus einem Stück bestehen beziehungsweise aus einem Stück herausgearbeitet sind. Beispielsweise kann der gesamte Gehäusekörper monolithisch ausgestaltet sein oder es liegt zumindest ein monolithischer Teilkörper des Gehäusekörpers vor, zu dem der Boden und die Stege gehören.

Die Winkelmesseinrichtung kann als eine induktive Winkelmesseinrichtung ausgebildet sein oder auf einem optischen, magnetischen oder kapazitiven Prinzip beruhen. Weiterhin ist vorzugsweise die Winkelmesseinrichtung, die eine Winkelskala, eine Abtasteinheit und eine Auswerteelektronik aufweist, als eine lagerlose Winkelmesseinrichtung ausgestaltet.

Vorteilhafte Ausbildungen der Erfindung entnimmt man den abhängigen Ansprüchen.

Weitere Einzelheiten und Vorteile der erfindungsgemäßen Abtasteinheit ergeben sich aus der nachfolgenden Beschreibung zweier Ausführungsbeispiele anhand der beiliegenden Figuren.

### KURZE BESCHREIBUNG DER ZEICHNUNGEN

Es zeigen die
- Figur 1: eine Seitenansicht einer Leiterplatte mit einem Kontaktträger als Teil der Abtasteinheit,
- Figur 2: eine perspektivische Darstellung der Leiterplatte mit dem Kontaktträger,
- Figur 3: eine Schnitt-Darstellung eines Gehäusekörpers,
- Figur 4: eine Schnitt-Darstellung eines Gehäusekörpers mit der Leiterplatte und dem Kontaktträger,
- Figur 5: eine perspektivische Ansicht der Abtasteinheit,
- Figur 6: eine Schnitt-Darstellung einer Winkelmesseinrichtung mit der Abtasteinheit im angebauten Zustand
- Figur 7: eine perspektivische Ansicht einer Abtasteinheit gemäß einem zweiten Ausführungsbeispiel.

### BESCHREIBUNG DER AUSFÜHRUNGSFORMEN

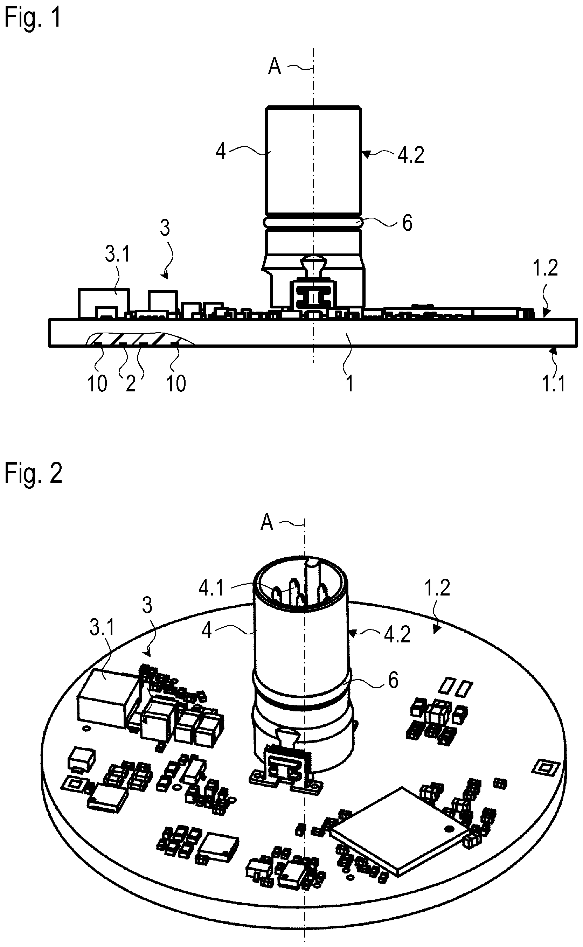

Ein Teil einer Abtasteinheit, die in einer Winkelmesseinrichtung eingesetzt werden soll, ist in der Figur 1 in einer Seitenansicht beziehungsweise in der Figur 2 in einer perspektivischen Ansicht gezeigt. Die Abtasteinheit umfasst demnach unter anderem eine scheibenförmige beziehungsweise kreisförmigen Leiterplatte 1 auf Basis eines steifen glasfaserverstärkten Epoxydharzes. Die Leiterplatte 1 weist naturgemäß eine erste Oberfläche 1.1 und eine der ersten Oberfläche 1.1 gegenüber liegende zweite Oberfläche 1.2 auf. Im vorgestellten Ausführungsbeispiel beruht die Abtasteinheit auf einem induktiven Messprinzip. Demgemäß ist eine Detektoranordnung 2, die an der ersten Oberfläche 1.1 angeordnet ist, als mehrere Empfängerwindungen ausgestaltet. Zudem sind an der ersten Oberfläche 1.1 mehrere Erregerleiterbahnen 10 angeordnet.

Auf der zweiten Oberfläche 1.2 sind unter anderem elektronische Bauelemente 3.1 einer Auswerteelektronik 3 montiert. Ebenfalls auf der zweiten Oberfläche 1.2 der Leiterplatte 1 ist ein Kontaktträger 4 montiert, beispielsweise mit Hilfe eines SMD-Prozesses. Der Kontaktträger 4 umschließt elektrische Kontakte 4.1 (Figur 2), die zur Herstellung einer Steckverbindung geeignet sind, wobei die Kontakte 4.1 in einer Richtung parallel zu einer Achse A verlaufen. Der Kontaktträger 4 weist eine Außenwand 4.2 beziehungsweise Außenfläche auf, die geometrisch betrachtet im Wesentlichen einer zylindrischen Mantelfläche entspricht. Die Außenwand 4.2 weist eine umlaufende Nut auf, in die ein erstes elastisches Element 6, hier ein O-Ring, angeordnet ist.

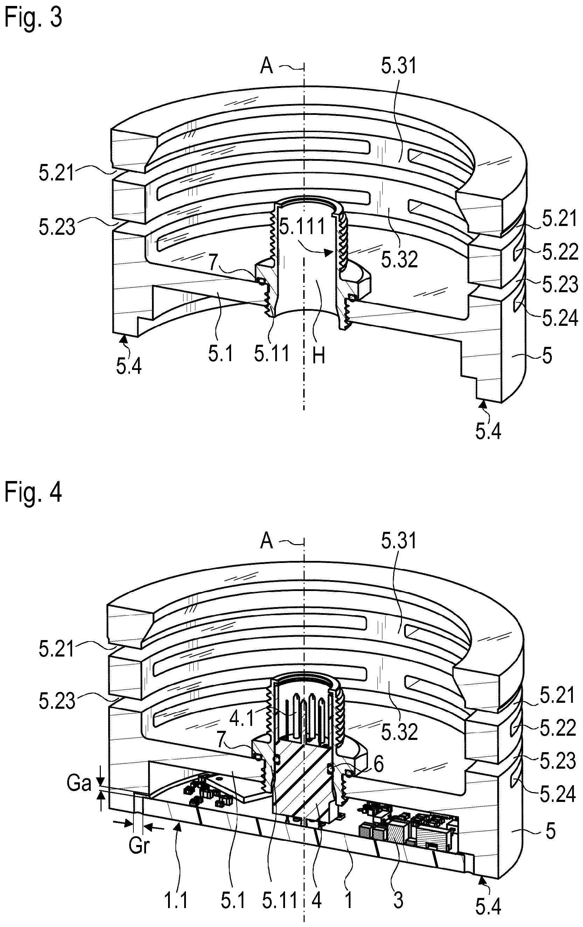

Die Abtasteinheit weist außerdem einen Gehäusekörper 5 auf, der beispielsweise in der Figur 3 dargestellt ist. Der Gehäusekörper 5 umfasst einen Boden 5.1, der innerhalb eines starren ringförmigen Abschnittes des Gehäuses 5 angeformt ist. Im Boden befindet sich bezüglich der Achse A zentral eine Bohrung, wobei in die Bohrung eine Hülse 5.11 eingeschraubt ist. Axial zwischen einem Flansch der Hülse 5.11 und dem Boden 5.1 befindet sich ein zweites elastisches Element 7. Auch das zweite elastische Element 7 ist hier als O-Ring ausgestaltet. Die Hülse 5.11 weist eine durchgehende Öffnung H auf und dementsprechend eine Innenwand 5.111. Die Innenwand 5.111 hat eine konkave hohlzylindrische Geometrie, deren Symmetrieachse die Achse A ist. Axial beidseitig des Bodens 5.1 weist der Gehäusekörper 5 eine im wesentliche hohlzylindrische Form auf. Der Gehäusekörper 5 weist zudem an einer ringförmigen Stirnseite eine bearbeitete Anschlagfläche 5.4 auf.

Damit eine axiale Verformbarkeit des Gehäusekörpers 5 erreicht wird, sind im vorgestellten Ausführungsbeispiel mehrere jeweils über einen Teilumfang des Gehäusekörpers 5 eingearbeitete Ausnehmungen 5.21, 5.22, 5.23, 5.24 vorgesehen. Diese durchdringen die Wand des Gehäusekörpers 5 in radialer Richtung vollständig, wie dies beispielsweise in den Figuren 3 und 4 im Bereich zwischen den schraffierten Schnittflächen ersichtlich ist. In Umfangsrichtung zwischen diesen Ausnehmungen 5.21, 5.22, 5.23, 5.24 liegen axial verlaufende Stege 5.31, 5.32, 5.33, 5.34 vor. Insbesondere können die Ausnehmungen 5.21, 5.22, 5.23, 5.24 durch einen Sägeprozess erzeugt werden, wobei die sich in axial Richtung erstreckenden Stege 5.31, 5.32, 5.33, 5.34 stehen gelassen werden. Der Gehäusekörper 5 ist dann so ausgestaltet, dass die nicht abgetragenen Bereiche eine mäanderartige Gestalt aufweisen. Stege 5.31, 5.32, 5.33, 5.34 sind also diejenigen Bereich des stehen gelassenen Materials, die in einer axialen Richtungskomponente verlaufen.

Die Ausnehmungen 5.21, 5.22, 5.23, 5.24 können zu Paaren zusammengefasst werden, wobei in den Figuren diejenigen Ausnehmungen mit derselben Endziffer im Bezugszeichen zu einem Paar gehören (somit liegen jeweils zwei Ausnehmungen mit demselben Bezugszeichen vor). Im vorgestellten Ausführungsbeispiel weist der Gehäusekörper 5 jeweils vier Paare von Ausnehmungen 5.21, 5.22, 5.23, 5.24 auf.

Beispielsweise weist ein erstes Paar von Ausnehmungen die Ausnehmungen 5.21 auf, die bezüglich eines Punktes auf der Achse A (punkt-) symmetrisch angeordnet sind. Gleiches gilt für die Ausnehmungen 5.22, die einem zweiten Paar von Ausnehmungen zugeordnet werden können sowie für die dritten und vierten Paare.

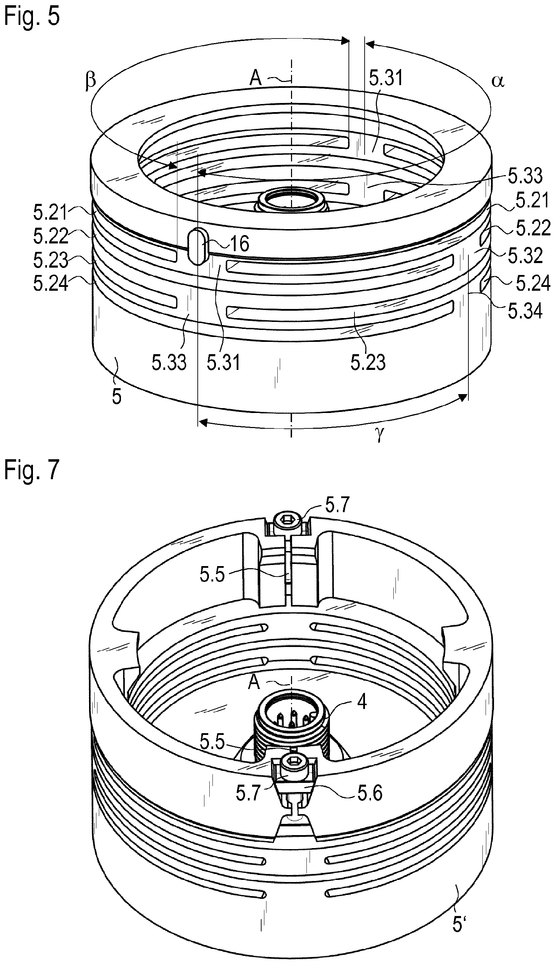

Wie aus der Figur 5 zu entnehmen ist, sind hier die Ausnehmungen 5.21 des ersten Paares von Ausnehmungen gegenüber den Ausnehmungen 5.22 des zweiten Paares von Ausnehmungen axial versetzt und über den Umfang um etwa 90° versetzt angeordnet.

Die Ausnehmungen 5.21, 5.22, 5.23, 5.24 erstrecken sich über einen Umfangswinkel β von ca. 170°.

Die Ausnehmungen 5.21 des ersten Paares von Ausnehmungen befinden sich in einer ersten geometrischen Ebene und die Ausnehmungen 5.22 des zweiten Paares von Ausnehmungen befinden sich in einer zweiten geometrischen Ebene, welche gegenüber der ersten geometrischen Ebene axial versetzt angeordnet ist. Sowohl die erste geometrische Ebene als auch die zweite geometrische Ebene sind so angeordnet, dass der jeweilige Normalenvektor der jeweiligen Ebene parallel zur Achse A orientiert ist. Im vorgestellten Ausführungsbeispiel gilt die gleiche Betrachtung auch für das dritte und das vierte Paar von Ausnehmungen 5.23; 5.24.

Ebenso können die Stege 5.31, 5.32, 5.33, 5.34 zu vier Paaren zusammengefasst werden, wobei der Gehäusekörper 5 hier insgesamt acht Stege 5.31, 5.32, 5.33, 5.34 aufweist, von denen in der Figur 5 sechs sichtbar sind. Ein erstes Paar von Stegen umfasst die Stege 5.31, die bezüglich eines Punktes auf der Achse A (punkt-) symmetrisch angeordnet sind. Die Stege 5.31 des ersten Paares sind um einen Winkel α = 180° in Umfangsrichtung versetzt zueinander angeordnet. Gleiches gilt für die Stege 5.32, die einem zweiten Paar von Stegen zugeordnet werden können sowie den Stegen 5.33, 5.34 des dritten und vierten Paares. Die Stege 5.31 des ersten Paares von Stegen sind gegenüber den Stegen 5.32 des zweiten Paares von Stegen axial versetzt und über den Umfang um einen Umfangswinkel γ, hier 90°, versetzt angeordnet. Im vorgestellten Ausführungsbeispiel sind vier Paare von Stegen 5.31, 5.32, 5.33, 5.34 axial versetzt zueinander angeordnet. Die Stege 5.31, 5.33 der ersten und dritten Paare sind hier gegenüber den Stegen 5.32, 5.34 der zweiten und vierten Paare um denselben Umfangswinkel γ versetzt angeordnet.

Weiterhin ist der Gehäusekörper 5 so ausgestaltet, dass dieser ein erstes Paar von Stegen aufweist, dessen Stege 5.31 in einer gedachten Ebene angeordnet sind, deren Normalenvektor parallel zur Achse A orientiert ist. Mit anderen Worten schneidet die Achse A die besagte Ebene orthogonal. Die gleiche Betrachtung gilt auch für die Stege 5.32 des zweiten Paares von Stegen wobei diejenigen Ebenen in der diese Stege 5.32 verortet sind axial versetzt zur betreffenden Ebene für das erste Paar von Stegen angeordnet ist.

Die Abtasteinheit weist Stege 5.31, 5.32, 5.33, 5.34 auf, zwischen welchen axial eine Ausnehmung 5.21, 5.22, 5.23, 5.24 angeordnet ist, so dass diese Stege 5.31, 5.32, 5.33, 5.34 axial versetzt angeordnet sind. Insbesondere ist zwischen den fluchtenden und axial versetzt angeordneten Stegen 5.31, 5.33 die Ausnehmung 5.22 angeordnet. Ebenso ist zwischen den fluchtenden und axial versetzt angeordneten Stegen 5.32, 5.34 die Ausnehmung 5.23 angeordnet.

Im vorgestellten Ausführungsbeispiel ist der Gehäusekörper 5 einstückig beziehungsweise einteilig mit Ausnahme der Hülse 5.11 ausgebildet. Insbesondere ist der Gehäusekörper 5 aus einem Aluminium-Material hergestellt.

Im Zuge der Montage der Abtasteinheit wird die Leiterplatte 1 zusammen mit dem Kontaktträger 4 mitsamt dem ersten elastischen Element 6 mit dem Gehäuse 5 zusammengefügt, so dass eine Anordnung wie sie etwa in der Figur 4 gezeigt ist vorliegt. Entsprechend ragt der Kontaktträger 4 in die Öffnung H. Zwischen der Innenwand 5.111 der Öffnung H und der Außenwand 4.2 des Kontaktträgers 4 ist das elastische Element 6 mit radialer Vorspannung, also in radialer Richtung zusammengepresst, angeordnet. Durch diese Vorspannung ist der Kontaktträger 4 bezüglich der Innenwand 5.111 der Öffnung H ohne weiteres Zutun zentriert angeordnet. Durch die Gestaltung des Gehäusekörpers 5 und die Dimensionierung der Leiterplatte 1 ist die Leiterplatte 1 mit einem ersten Spalt Gr (Figur 4) zum Gehäusekörper 5 radial beabstandet angeordnet.

Für eine präzise Arbeitsweise der gesamten Winkelmesseinrichtung ist es wichtig, dass die Leiterplatte 1 mit der Detektoranordnung 2 nicht nur bezüglich der Achse A zentriert angeordnet ist, ebenso von Bedeutung ist in diesem Zusammenhang, dass eine definierte axiale Position der Leiterplatte 1 hergestellt wird. Im vorgestellten Ausführungsbeispiel wird die erste Oberfläche 1.1 der Leiterplatte 1 bündig mit der Anschlagfläche 5.4 des Gehäusekörpers 5 montiert.

Zu diesem Zweck wird zunächst die Leiterplatte 1 weit möglichst, also bis zum Anschlag, in den Gehäusekörper 5 gedrückt. Danach wird ein Kleber 8 in den umlaufenden Spalt Gr gebracht. Darauffolgend wird die Anschlagfläche 5.4 auf eine ebene Fläche gedrückt. Dann wird der Kontaktträger 4 so weit relativ zur Öffnung H verschoben bis die Leiterplatte 1 die ebene Fläche berührt und die oben genannte bündige Anordnung erreicht ist. Hier kann es vorteilhaft sein, wenn der Kontaktträger 4 durch ein Montagehilfswerkzeug in Richtung der Leiterplatte 1 gedrückt wird. In dieser Position liegt die zweite Oberfläche 1.2 der Leiterplatte 1 nicht am Gehäusekörper 5 an, vielmehr liegt ein axialer zweiter Spalt Ga vor, was hier zur Folge hat, dass der noch nicht ausgehärtete Kleber 8 durch Kapillareffekte in diesen zweiten Spalt Ga kriecht. Durch die axiale Vorspannung des Gehäusekörpers 5 und die axiale Druckkraft auf den Kontaktträger 4 wird sichergestellt, dass die exakt bündige Position zwischen der Leiterplatte 1 und der Anschlagfläche 5.4 beibehalten wird. Der erste Spalt Gr und der zweite Spalt Ga sind also in dieser Phase mit einem Klebstoff 8 (Figur 6) ausgefüllt, wobei der Klebstoff 8 beispielsweise in einem Wärmeofen nachfolgend ausgehärtet wird. Nach dem Aushärten des Klebstoffes 8 ist die Leiterplatte 1 mit dem Gehäusekörper 5 starr und insbesondere drehsteif verbunden, so dass die axiale Vorspannung des Gehäusekörpers 5 nun aufgehoben werden kann. Die elektronischen Bauelemente 3.1 sind somit gegenüber äußeren Einflüssen, wie etwa gegen das Eindringen von Schmiermitteln oder Feuchtigkeit, sowie mechanischen Einflüssen wirksam abgeschirmt.

Die Abtasteinheit gemäß den Figuren 3 bis 5 und eine Winkelskala 9 bilden zusammen gemäß der Figur 6 eine Winkelmesseinrichtung, die hier als eine induktive Winkelmesseinrichtung ausgestaltet ist, die also auf einem induktiven Messprinzip beruht. Die Winkelskala 9 ist im vorgestellten Ausführungsbeispiel als eine ringförmige Platine ausgestaltet, auf der in periodischer Abfolge und in gleichen Teilungsschritten leitende und nicht leitende Bereiche, also Bereiche unterschiedlicher elektrischer Leitfähigkeit vorgesehen sind. Die Winkelskala 9 ist mit einer Nabe 15 drehfest verbunden.

Die Figur 6 zeigt eine Winkelmesseinrichtung, die mit der induktiven Abtasteinheit ausgestattet ist und welche an einem Motor montiert ist. Der Motor weist eine statorseitige Bremse auf, die eine Ankerscheibe 12 umfasst: Weiterhin weist der Motor ein relativ zu einem Gehäuse des Motors und zur Ankerscheibe 12 drehbare Welle 13 auf. Mit der Welle 13 wird die Nabe 15 drehfest und mit exakt justiertem Luftspalt mit einer Spaltweite D zwischen der Leiterplatte 1 und der Winkelskala 9 verbunden. Zu diesem Zweck weist die Welle 13 ein erstes Innengewinde 13.1 auf, das in ein Außengewinde der Nabe 15 eingreifen kann. Durch eine entsprechende relative Drehung zwischen der Welle 13 und der Nabe 15 kann somit eine axiale Verschiebung der Nabe 15 relativ zur Welle 13 erreicht werden. Im Zuge der Montage der Nabe 15 an der Welle 13 wird zunächst die Nabe 15 in die Welle 13 geschraubt, wobei mit einem Hilfswerkzeug der Abstand beziehungsweise die Spaltweite D, hier z. B. 1,4 mm zwischen der Oberkante des Gehäuses 12 und der Oberfläche der Winkelskala 9 exakt eingestellt wird. Sobald diese Position erreicht ist, wird eine zentrale Schraube 16 in ein zweites (kleineres) Innengewinde 13.2 der Welle 13 gedreht. Dies hat zur Folge, dass die Gewindegänge der Welle 13 und der Nabe 15 verspannt werden, so dass danach die Winkelskala 9 mit der Teilungsstruktur drehfest an der Welle 13 fixiert ist.

Danach wird die Abtasteinheit insbesondere der Gehäusekörper 5 an der Ankerscheibe 12 des Motors befestigt. Damit eine relative Verdrehung des Gehäusekörpers 5 in Bezug auf die Ankerscheibe 12 vermieden wird, weist der Gehäusekörper 5 eine Passfeder 16 (Figur 5) auf, die in eine Nut eines statorseitigen so genannten Spulenträgers 14 eingeführt wird. Zudem wird der Gehäusekörper 5 axial vorgespannt, so dass der Gehäusekörper 5 elastisch verformt ist und die axialen Spaltweiten der Ausnehmungen 5.21, 5.22, 5.23, 5.24 im Vergleich zum entspannten Zustand reduziert sind. Um diese axiale Vorspannung zu halten wird gemäß der Figur 6 ein umlaufender Sicherungsring 11 (hier ein Seegerring) montiert. Auf diese Weise ist sichergestellt, dass sich dauerhaft die Abtasteinheit mit der Anschlagfläche 5.4 des Gehäusekörpers 5 an der Ankerscheibe 12 des Motors abstützt. Ein Abheben der Anschlagfläche 5.4 von der Ankerscheibe 12 ist auch bei stärkeren Vibrationen des Motors oder bei Auftreten von Stößen nicht möglich. Durch die bündige Anordnung der Leiterplatte 1 in Bezug auf die Anschlagfläche 5.4 entspricht der Abstand zwischen der Leiterplatte 1 und der Winkelskala 9 der zuvor eingestellten Spaltweite D.

Der Gehäusekörper 5 ist durch die oben beschriebene Bauweise axial biegeweich aber torsionssteif und radialsteif ausgestaltet.

Im Betrieb der Winkelmesseinrichtung dreht sich die Winkelskala 9 gegenüber der Abtasteinheit um die Achse A. Zur Erreichung der relativen Drehbarkeit ist bei der vorliegenden Winkelmesseinrichtung keine Eigenlagerung, also kein Wälzlager oder Gleitlager, vorgesehen, so dass es sich im vorgestellten Ausführungsbeispiel um eine lagerlose Winkelmesseinrichtung handelt.

Die Winkelskala 9 und die Abtasteinheit sind also relativ zueinander drehbar angeordnet, wobei die an der Welle 13 befestigte Winkelskala 9 im Betrieb der Winkelmesseinrichtung rotiert. Demnach entspricht hier die relative Drehzahl zwischen der Winkelskala 9 und der Abtasteinheit auch der Drehzahl zwischen der Welle 13 und dem feststehenden Gehäusekörper 5. Durch die nicht rotierenden Erregerspulen 10 auf der statorseitigen Abtasteinheit wird im Betrieb der Winkelmesseinrichtung ein homogenes Wechselfeld erzeugt, das durch die Winkelskala 9 abhängig von der Winkelstellung beziehungsweise vom Drehwinkel der Welle 13 moduliert wird. In der Detektoranordnung 2, die sich ebenfalls auf der Abtasteinheit befindet, werden durch das modulierte elektromagnetische Feld winkelabhängige Signale erzeugt. Die von der Detektoranordnung 2, also hier den Empfängerwindungen, erzeugten Signale werden von der Auswerteelektronik 3 in der Weise weiterverarbeitet, dass eine relative Winkelstellung zwischen der Abtasteinheit und der Winkelskala 9 bestimmt wird. Der im Gehäusekörper 5 befindliche Steckverbinder beziehungsweise die Kontakte 4.1 werden mit einem in den Figuren nicht dargestelltem Verbindungskabel in Kontakt gebracht, welches an eine Folgeelektronik angeschlossen ist.

Grundsätzlich kann festgestellt werden, dass die Messanordnung auch auf Veränderungen des tatsächlichen Abtastabstands D reagiert. Der Abtastabstand D beinhaltet die Information, ob die statorseitige Bremse eingefallen ist oder nicht. Somit kann der jeweils aktuelle Zustand der Bremse (eingefallen oder frei) durch die Abtasteinheit ermittelt werden.

Im vorgestellten Ausführungsbeispiel ist die Winkelmesseinrichtung gemäß einer so genannten Rundumabtastung konfiguriert. Das heißt insbesondere, dass die Abtasteinheit so ausgestaltet ist, dass die Winkelskala 9 durch die Abtasteinheit beziehungsweise durch die Detektoranordnung 2 über nahezu den gesamten Umfang abtastbar ist und so winkelabhängige Ausgangssignale erzeugbar sind. Es wird also nahezu die komplette Teilungsstruktur der Winkelskala 9 zur Gewinnung eines Positionssignals von der Abtasteinheit abgetastet.

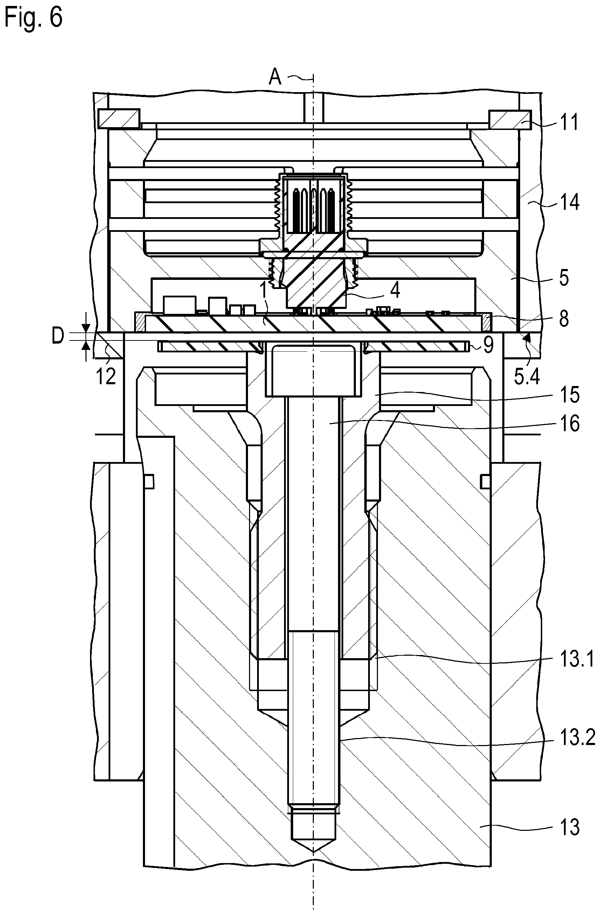

Anhand der Figur 7 wird ein zweites Ausführungsbeispiel gezeigt, welches sich vom ersten durch eine alternative Ausgestaltung eines Gehäusekörpers 5' aufweist. Durch diese Variante kann eine klemmende Montage der Abtasteinheit ermöglicht werden. Der Gehäusekörper 5' weist zwei in axialer Richtung verlaufende Schlitze 5.5 sowie keilförmige Elemente 5.6 auf, die durch Klemmschrauben 5.7 in axialer Richtung verlagert werden können. Dadurch kann die Außenkontur des Gehäusekörpers 5' in diesem Bereich radial nach außen gedrängt werden, was bei einer entsprechenden Dimensionierung des Motorgehäuses zu einer bleibenden Klemmung des Gehäusekörpers 5' führt.

## Patentansprüche

1. Abtasteinheit zur Bestimmung einer relativen Winkelstellung einer um eine Achse (A) bezüglich der Abtasteinheit drehbaren Winkelskala (9) umfassend
- eine Leiterplatte (1), die eine erste Oberfläche (1.1) und eine zweite Oberfläche (1.2) aufweist,
- eine Detektoranordnung (2), die auf der ersten Oberfläche (1.1) der Leiterplatte (1) montiert und so angeordnet ist, dass die der ersten Oberfläche (1.1) der Leiterplatte (1) gegenüber liegende Winkelskala (9) abtastbar ist,
- eine Auswerteelektronik (3),
- einen Kontaktträger (4), welcher elektrische Kontakte (4.1) zur Herstellung einer Steckverbindung umschließt und eine Außenwand (4.2) aufweist und welcher auf der zweiten Oberfläche (1.2) der Leiterplatte (1) montiert ist, so dass die Kontakte (4.1) in einer Richtung verlaufen, die eine axiale Komponente bezüglich der Achse (A) aufweist,
- einen Gehäusekörper (5; 5') mit einer Öffnung (H), welche eine Innenwand (5.111) aufweist,
- ein erstes elastisches Element (6), wobei
der Kontaktträger (4) in die Öffnung (H) ragt, wobei zwischen der Innenwand (5.111) der Öffnung (H) und der Außenwand (4.2) des Kontaktträgers (4) das erste elastische Element (6) mit bezüglich der Achse (A) radialer Vorspannung angeordnet ist, so dass der Kontaktträger (4) bezüglich der Innenwand (5.111) der Öffnung (H) zentriert angeordnet ist, und
die Leiterplatte (1) mit einem ersten Spalt (Gr) zum Gehäusekörper (5; 5') bezüglich der Achse (A) radial beabstandet zum Gehäusekörper (5; 5') und drehsteif mit dem Gehäusekörper (5; 5') verbunden ist.

2. Abtasteinheit gemäß einem der vorhergehenden Ansprüche, wobei der erste Spalt (Gr) mit einem Klebstoff (8) ausgefüllt ist.

3. Abtasteinheit gemäß einem der vorhergehenden Ansprüche, wobei das erste elastische Element (6) als ein O-Ring ausgestaltet ist, welcher bezüglich der Achse (A) zentrisch angeordnet ist.

4. Abtasteinheit gemäß einem der vorhergehenden Ansprüche, wobei die Leiterplatte (1) mit einem zweiten Spalt (Ga) zum Gehäusekörper (5; 5') axial beabstandet zum Gehäusekörper (5; 5') drehsteif mit dem Gehäusekörper (5; 5') verbunden ist.

5. Abtasteinheit gemäß dem Anspruch 4, wobei der zweite Spalt (Ga) mit einem Klebstoff (8) ausgefüllt ist.

6. Abtasteinheit gemäß einem der vorhergehenden Ansprüche, wobei die Außenwand (4.2) des Kontaktträgers (4) geometrisch gemäß einer Mantelseite eines Zylinders ausgebildet ist.

7. Abtasteinheit gemäß einem der vorhergehenden Ansprüche, wobei die Öffnung (H) eine rotationssymmetrische Innenfläche aufweist mit der Achse (A) als Symmetrieachse.

8. Abtasteinheit gemäß einem der vorhergehenden Ansprüche, wobei der Gehäusekörper (5; 5') einen Boden (5.1) aufweist und die Leiterplatte (1) derart am Gehäusekörper (5; 5') angeordnet ist, dass die Auswerteelektronik (3) zwischen dem Boden (5.1) und der Leiterplatte (1) angeordnet ist.

9. Abtasteinheit gemäß dem Anspruch 8, wobei der Boden (5.1) eine Bohrung aufweist, in der zur Aufnahme des Kontaktträgers (4) eine Hülse (5.11) befestigt ist.

## Claims

1. Scanning unit for determining a relative angular position of an angle scale (9) which can be rotated about an axis (A) with respect to the scanning unit, comprising
- a printed circuit board (1) which has a first surface (1.1) and a second surface (1.2),
- a detector arrangement (2) which is mounted on the first surface (1.1) of the printed circuit board (1) and is arranged such that the angle scale (9) which is situated opposite the first surface (1.1) of the printed circuit board (1) can be scanned,
- an evaluation electronics system (3),
- a contact carrier (4) which encloses electrical contacts (4.1) for establishing a plug-in connection and has an outer wall (4.2) and which is mounted on the second surface (1.2) of the printed circuit board (1), so that the contacts (4.1) run in a direction which has an axial component with respect to the axis (A),
- a housing body (5; 5') with an opening (H) which has an inner wall (5.111),
- a first elastic element (6),
wherein the contact carrier (4) projects into the opening (H), wherein the first elastic element (6) is arranged between the inner wall (5.111) of the opening (H) and the outer wall (4.2) of the contact carrier (4) with radial prestress with respect to the axis (A), so that the contact carrier (4) is arranged in a manner centred with respect to the inner wall (5.111) of the opening (H), and the printed circuit board (1) is radially spaced apart from the housing body (5; 5') with respect to the axis (A) by way of a first gap (Gr) from the housing body (5; 5') and is connected in a rotationally fixed manner to the housing body (5; 5').

2. Scanning unit according to one of the preceding claims, wherein the first gap (Gr) is filled with an adhesive (8).

3. Scanning unit according to one of the preceding claims, wherein the first elastic element (6) is configured as an O-ring which is arranged centrally with respect to the axis (A).

4. Scanning unit according to one of the preceding claims, wherein the printed circuit board (1) is connected to the housing body (5; 5') in a rotationally fixed manner and in a manner axially spaced apart from the housing body (5; 5') by way of a second gap (Ga) from the housing body (5; 5').

5. Scanning unit according to Claim 4, wherein the second gap (Ga) is filled with an adhesive (8).

6. Scanning unit according to one of the preceding claims, wherein the outer wall (4.2) of the contact carrier (4) is formed geometrically in accordance with a lateral side of a cylinder.

7. Scanning unit according to one of the preceding claims, wherein the opening (H) has a rotationally symmetrical inner face with the axis (A) as the axis of symmetry.

8. Scanning unit according to one of the preceding claims, wherein the housing body (5; 5') has a base (5.1) and the printed circuit board (1) is arranged on the housing body (5; 5') in such a way that the evaluation electronics system (3) is arranged between the base (5.1) and the printed circuit board (1).

9. Scanning unit according to Claim 8, wherein the base (5.1) has a bore in which a sleeve (5.11) is fastened for receiving the contact carrier (4).

## Revendications

1. Unité de balayage permettant de déterminer une position angulaire relative d'une échelle goniométrique (9) pouvant tourner sur un axe (A) par rapport à l'unité de balayage, comprenant
- une carte de circuits imprimés (1) qui présente une première surface (1.1) et une deuxième surface (1.2),
- un ensemble de détection (2) qui est monté sur la première surface (1.1) de la carte de circuits imprimés (1) et est disposé de telle sorte que l'échelle goniométrique (9) située à l'opposé de la première surface (1.1) de la carte de circuits imprimés (1) peut être balayée,
- une électronique d'évaluation (3),
- un support de contacts (4) qui entoure des contacts électriques (4.1) pour établir une connexion enfichable et présente une paroi extérieure (4.2), et qui est monté sur la deuxième surface (1.2) de la carte de circuits imprimés (1) de sorte que les contacts (4.1) s'étendent dans une direction qui présente une composante axiale par rapport à l'axe (A),
- un corps de boîtier (5 ; 5') doté d'une ouverture (H) qui présente une paroi intérieure (5.111),
- un premier élément élastique (6),
dans laquelle le support de contacts (4) fait saillie dans l'ouverture (H), le premier élément élastique (6) étant disposé entre la paroi intérieure (5.111) de l'ouverture (H) et la paroi extérieure (4.2) du support de contact (4) sous une précontrainte radiale par rapport à l'axe (A) de sorte que le support de contacts (4) est disposé de manière centrée par rapport à la paroi intérieure (5.111) de l'ouverture (H), et la carte de circuits imprimés (1) est reliée au corps de boîtier (5 ; 5') avec un premier jeu (Gr) par rapport au corps de boîtier (5 ; 5') de manière radialement espacée du corps de boîtier (5 ; 5') par rapport à l'axe (A) et de manière solidaire en rotation.

2. Unité de balayage selon l'une quelconque des revendications précédentes, dans laquelle le premier jeu (Gr) est comblé avec un adhésif (8).

3. Unité de balayage selon l'une quelconque des revendications précédentes, dans laquelle le premier élément élastique (6) est configuré sous la forme d'un joint torique qui est disposé de manière centrée par rapport à l'axe (A).

4. Unité de balayage selon l'une quelconque des revendications précédentes, dans laquelle la carte de circuits imprimés (1) est reliée au corps de boîtier (5 ; 5') de manière solidaire en rotation avec un deuxième jeu (Ga) par rapport au corps de boîtier (5 ; 5') de manière axialement espacée du corps de boîtier (5 ; 5').

5. Unité de balayage selon la revendication 4, dans laquelle le deuxième jeu (Ga) est comblé avec un adhésif (8) .

6. Unité de balayage selon l'une quelconque des revendications précédentes, dans laquelle la paroi extérieure (4.2) du support de contacts (4) est réalisée géométriquement selon une surface latérale d'un cylindre.

7. Unité de balayage selon l'une quelconque des revendications précédentes, dans laquelle l'ouverture (H) présente une surface intérieure à symétrie de révolution avec l'axe (A) comme axe de symétrie.

8. Unité de balayage selon l'une quelconque des revendications précédentes, dans laquelle le corps de boîtier (5 ; 5') présente un fond (5.1), et la carte de circuits imprimés (1) est disposée sur le corps de boîtier (5 ; 5') de telle sorte que l'électronique d'évaluation (3) est disposée entre le fond (5.1) et la carte de circuits imprimés (1).

9. Unité de balayage selon la revendication 8, dans laquelle le fond (5.1) présente un perçage dans lequel est fixée une douille (5.11) pour recevoir le support de contacts (4).
